# EUROPEAN PATENT APPLICATION

(11) **EP 3 211 577 A1**
(43) Date of publication of application: **30.08.2017**
(21) Application number: 17156884.3
(22) Date of filing: 20.02.2017
(51) Int. Cl.: G06Q 20/04, G06Q 20/20, G06Q 30/04

(54) **RECEIPT SERVER, ELECTRONIC RECEIPT SYSTEM, AND PROGRAM**

(30) Priority: 26.02.2016 JP 2016035716
(71) Applicant: Toshiba TEC Kabushiki Kaisha, Tokyo 141-0032 (JP)
(72) Inventor: SANBE, Masanori, Shinagawa-ku, Tokyo 141-8562 (JP)
(74) Representative: Takeuchi, Maya

(57) **Abstract**

A receipt server is connected over a network to a point-of-sale (POS) terminal, and includes a network interface, a storage unit, and a processor. The processor controls the network interface and the storage unit to store electronic receipt data received from the POS terminal, determine whether the electronic receipt data indicates that a digital authentication service should be applied thereto, when the electronic receipt data indicates that the digital authentication service should be applied thereto, and request and receive a time stamp token (TST) from a time stamping authority server, wherein the TST is generated based on a hash of the electronic receipt data and a time of generation. In addition, when the TST is received, the processor stores the TST in association with the electronic receipt data, and in response to a request for certified electronic receipt data, transmits the electronic receipt data with the associated TST.

## Description

### FIELD

The present invention relates to receipt managing technologies in general, and embodiments described herein relate in particular to a receipt server, an electronic receipt system, and a program.

### BACKGROUND

An electronic receipt service manages electronic receipts and allows a service user to view the electronic receipt by a portable terminal or the like. However, the electronic receipt service may not prevent alteration of the electronic receipt data. For this reason, the electronic receipt data cannot be used as a certified document, such as may be required, for example, for the certification of tax payment. In view of such situations, it is desired that electronic receipt data can also be used as a certified document.

To this end, there is provided an electronic receipt system comprising a point-of-sale (POS) terminal and a receipt server, wherein
the POS terminal is configured to:
perform a settlement transaction with respect to a transaction for a user,
determine, based on a user setting, whether a digital authentication service should be applied to electronic receipt data corresponding to the settlement transaction,
generate the electronic receipt data corresponding to the settlement transaction, wherein the electronic receipt data includes a user ID of the user and indicates whether the digital authentication service should be applied thereto, and
transmit the electronic receipt data to the receipt server, and the receipt server is configured to:
   store the electronic receipt data received from the POS terminal,
   determine whether the electronic receipt data indicates that the digital authentication service should be applied thereto,
   when the electronic receipt data indicates that the digital authentication service should be applied thereto, request and receive a time stamp token (TST) from a time stamping authority server, wherein the TST is generated based on a hash of the electronic receipt data and a time of generation,
   when the TST is received, store the TST in association with the electronic receipt data, and
   in response to a request for certified electronic receipt data, transmit the electronic receipt data with the associated TST.

Preferably, the user setting is a predetermined condition stored in association with the user ID.

Preferably still, the predetermined condition is a threshold monetary amount.

Preferably yet, the predetermined condition is a specific merchandise subject to the settlement transaction.

Suitably, the user setting is input by the user in connection with the settlement transaction.

Suitably still, when the electronic receipt data indicates that the digital authentication service should be applied thereto, the receipt server is further configured to:
generate a PDF file including the electronic receipt data and the time of generation of the TST.
Suitably yet, the PDF file and the TST are transmitted in response to the request for certified electronic receipt data.

The invention also relates to a method for performing an electronic receipt management, comprising the steps of:
storing electronic receipt data received from a point-of-sale terminal;
determining whether the electronic receipt data indicates that a digital authentication service should be applied thereto;
when the electronic receipt data indicates that the digital authentication service should be applied thereto, requesting and receiving a time stamp token (TST) from a time stamping authority server, wherein the TST is generated based on a hash of the electronic receipt data and a time of generation;
storing the TST in association with the electronic receipt data; and
in response to a request for certified electronic receipt data, transmitting the electronic receipt data with the associated TST.

Preferably, the electronic-receipt-data storing step comprises storing the electronic receipt data includes a flag indicating whether the digital authentication service should be applied.

Preferably still, the method further comprises the step of:
generating a PDF file including the electronic receipt data and the time of generation of the TST, when the electronic receipt data indicates that the digital authentication service should be applied thereto.

Preferably yet, the PDF-file generating step comprises transmitting the PDF file and the TST in response to the request for certified electronic receipt data.

The invention further concerns a receipt server connected over a network to a point-of-sale (POS) terminal, the receipt server comprising:
a network interface,
a storage unit, and
a processor configured to control the network interface, wherein the storage unit is configured to perform the method according to any one of claims 8 to 11.

The invention also concerns a non-transitory computer readable medium containing a program causing a server to perform an electronic receipt management method according to any one of claims 8 to 11.

The invention further relates to a computer program product comprising program code means stored on a computer readable medium for performing the method according to any one of claims 8 to 11, when the program product is run on a computer.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating an example configuration of main components of an electronic receipt system according to an embodiment.
FIG. 2 is a flow chart of a control process performed by a CPU of a sales data processing apparatus.
FIG. 3 is a flow chart of a control process performed by a CPU of a receipt server.
FIG. 4 is a flow chart of a control process performed by a CPU of an information terminal.

### DETAILED DESCRIPTION

According to an exemplary embodiment, there is provided a receipt server that provides electronic receipt data which is also usable as a certified document, an electronic receipt system, and a program of the receipt server.

According to an embodiment, a receipt server is connected over a network to a point-of-sale (POS) terminal, and includes a network interface, a storage unit, and a processor. The processor controls the network interface and the storage unit to store electronic receipt data received from the POS terminal, determine whether the electronic receipt data indicates that a digital authentication service should be applied thereto, when the electronic receipt data indicates that the digital authentication service should be applied thereto, and request and receive a time stamp token (TST) from a time stamping authority server, wherein the TST is generated based on a hash of the electronic receipt data and a time of generation. In addition, when the TST is received, the processor stores the TST in association with the electronic receipt data, and in response to a request for certified electronic receipt data, transmits the electronic receipt data with the associated TST.

Hereinafter, an electronic receipt system according to an embodiment will be described with reference to the accompanying drawings.

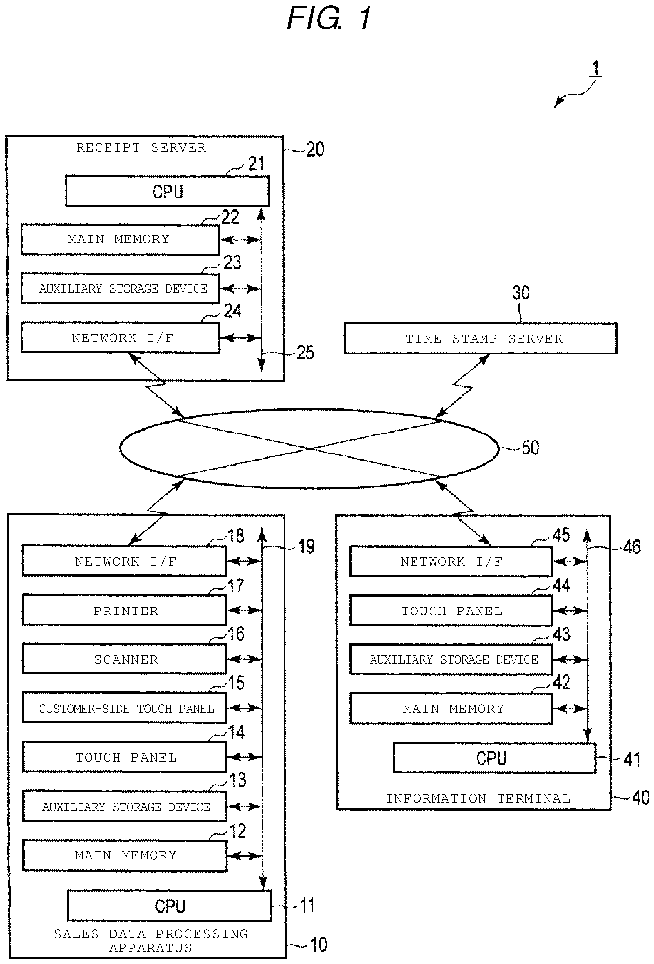

FIG. 1 is a block diagram illustrating an example configuration of main components of an electronic receipt system 1 according to the embodiment. The electronic receipt system 1 includes a sales data processing apparatus 10, a receipt server 20, a time stamp server 30, and an information terminal 40, each connected to a network 50.

The sales data processing apparatus 10 is located in a store, such as a supermarket, for business such as purchase registration and settlement of merchandise purchases, and is operated by a salesperson of the store. The sales data processing apparatus 10 is, for example, a point of sales (POS) terminal, an electronic cash register, or the like. Meanwhile, the sales data processing apparatus 10 may be a self-service type which is operated by a shopper. In addition, the sales data processing apparatus may be a semi-self-service type in which a registration unit that performs registration and a settlement unit that performs settlement are separated from each other, so that the registration unit is operated by a salesperson, and the settlement unit is operated by a shopper.

The sales data processing apparatus 10 includes a CPU 11, a main memory 12, an auxiliary storage device 13, a touch panel 14, a customer-side touch panel 15, a scanner 16, a printer 17, a network interface (I/F) 18, and a bus 19.

The CPU 11 may be a processor of a computer that performs processing and control necessary for the operation of the sales data processing apparatus 10. The CPU 11 controls each unit for performing various functions of the sales data processing apparatus 10 based on programs, such as an operating system and application software, which are stored in the main memory 12.

The main memory 12 may be a main storage portion of the computer. The main memory 12 stores the programs such as an operating system and application software. In addition, the main memory 12 stores data to be referred to when the CPU 11 performs various processes. Further, the main memory 12 stores data which is temporarily used when the CPU 11 performs various processes, and is used as a so-called work area. In addition, the main memory 12 stores a flag F.

The auxiliary storage device 13 may be an auxiliary storage portion of the computer. The auxiliary storage device 13 is, for example, an electric erasable programmable read-only memory (EEPROM), a hard disc drive (HDD), a solid state drive (SSD), or the like. The auxiliary storage device 13 stores data used when the CPU 11 performs various processes, data generated by processing performed by the CPU 11, or the like. The auxiliary storage device 13 may also store the above-mentioned programs such as an operating system and an application.

In addition, the main memory 12 or the auxiliary storage device 13 also stores a merchandise list which is a list of merchandise items registered as purchased merchandise items.

The programs stored in the main memory 12 or the auxiliary storage device 13 include a control program for a control process to be described later. As an example, the sales data processing apparatus 10 is provided to a store in a state where the control program is stored in the main memory 12 or the auxiliary storage device 13. However, the sales data processing apparatus 10 may be provided to the store in a state where the control program is not stored in the main memory 12 or the auxiliary storage device 13. A control program separately transferred to the sales data processing apparatus 10 may be written in the main memory 12 or the auxiliary storage device 13 under the operation of the user, a serviceperson, or the like. The transfer of the control program at this time can be achieved by being recorded in a removable recording medium such as a magnetic disk, a magneto-optical disk, an optical disk, or a semiconductor memory, or by downloading through a network.

The touch panel 14 functions as a display device that displays a screen that notifies an operator of various items of information. In addition, the touch panel 14 functions as an input device that receives the operator's touch operation. The customer-side touch panel 15 functions as a display device that displays a screen that notifies a shopper of various items of information. In addition, the customer-side touch panel 15 functions as an input device that receives the shopper's touch operation.

The scanner 16 reads a bar code displayed on a merchandise item and outputs a merchandise code indicated by the bar code. The scanner 16 may be a hand-held type or a type which is fixed to a register table or the like.

The printer 17 prints a receipt and the like. As the printer 17, various printers such as a dot impact printer, an ink jet printer, a thermal printer, a laser printer, and other printers can be used.

The network I/F 18 is a communication interface allowing the sales data processing apparatus 10 to perform communication through the network 50.

The bus 19 includes an address bus, a data bus, and the like, and transmits signals which are transmitted and received by units of the sales data processing apparatus 10.

The receipt server 20 includes a CPU 21, a main memory 22, an auxiliary storage device 23, a network I/F 24, and a bus 25.

The CPU 21 may be a processor of a computer. The CPU 21 controls each unit that achieves various functions of the receipt server 20 based on programs, such as an operating system and application software, which are stored in the main memory 22.

The main memory 22 may be a main storage portion of the computer. The main memory 22 stores programs such as an operating system and application software. The programs stored in the main memory 22 include a control program that controls the receipt server 20. In addition, the main memory 22 stores data to be referred to when the CPU 21 performs various processes. Further, the main memory 22 stores data which is temporarily used when the CPU 21 performs various processes, and is used as a so-called work area.

The auxiliary storage device 23 may be an auxiliary storage portion of the computer. The auxiliary storage device 23 is, for example, an EEPROM, an HDD, an SSD, or the like. The auxiliary storage device 23 stores data used when the CPU 21 performs various processes, data generated by processing performed by the CPU 21, or the like. The auxiliary storage device 23 may also store the above-mentioned programs such as an operating system and an application. The auxiliary storage device 23 stores electronic receipt data and a PDF (Portable Document Format) file in association with an individual user ID (identifier) which is allocated for each user of an electronic receipt service. In addition, an individual receipt ID is allocated for each piece of electronic receipt data and each PDF file to be described later. The receipt ID includes a receipt key allocated for each electronic receipt and a type key. The type key discriminates between electronic receipt data and a PDF file, and further discriminates the type of electronic receipt data. Details of the type key will be described later. Further, the auxiliary storage device 23 stores user information of an electronic receipt service in association with a user ID. The user information includes information indicating whether or not the user uses a digital authentication service. The digital evidence service is capable of authenticating the integrity of electronic receipt data. The user of the digital authentication service can previously set a condition to which the digital authentication service is applicable. The condition is, for example, "settlement amount is equal to or greater than a fixed amount" or "purchase merchandise includes specific merchandise or merchandise of a specific category", or the like. When a condition is set, information indicating the condition is also included in user information.

The programs stored in the main memory 22 or the auxiliary storage device 23 include a control program which is described with respect to a control process to be described later. As an example, the receipt server 20 is provided to an electronic receipt service in a state where the control program is stored in the main memory 22 or the auxiliary storage device 23. However, the receipt server 20 may be provided to the service in a state where the control program is not stored in the main memory 22 or the auxiliary storage device 23. A control program separately provided to the receipt server 20 may be written in the main memory 22 or the auxiliary storage device 23 under the operation of the user, a serviceperson, or the like. The transfer of the control program at this time can be achieved by being recorded in a removable recording medium such as a magnetic disk, a magneto-optical disk, an optical disk, or a semiconductor memory, or by downloading through a network.

The network I/F 24 is a communication interface allowing the receipt server 20 to perform communication through the network 50.

The bus 25 includes an address bus, a data bus, and the like, and transmits signals which are transmitted and received by units of the receipt server 20.

The time stamp server 30 receives a request for issuance of a time stamp token (hereinafter, referred to as a "TST"), and in response, issues the TST. The time stamp server 30 is provided by a time-stamping authority (TSA) to issue a TST, as an example.

The information terminal 40 is a device having a communication function, and is a portable information terminal such as a smart phone, a mobile phone, or a tablet personal computer (PC). The information terminal 40 may be a stationary computer such as a desktop PC, a notebook PC, or the like.

The information terminal 40 can output a user ID. The output of the user ID is performed by displaying a bar code including a user ID on a screen, printing a bar code including a user ID, or transmitting a user ID to another device.

A user of an electronic receipt service can use the information terminal 40 to acquire electronic receipt data from the receipt server 20.

The information terminal 40 includes a CPU 41, a main memory 42, an auxiliary storage device 43, a touch panel 44, a network I/F 45, and a bus 46.

The CPU 41 may be a processor of a computer. The CPU 41 controls each unit that achieves various functions of the information terminal 40 based on programs, such as an operating system and application software, which are stored in the main memory 42.

The main memory 42 may be a main storage portion of the computer. The main memory 42 stores the programs such as an operating system and application software. The programs stored in the main memory 42 include a control program that controls the information terminal 40. In addition, the main memory 42 stores data to be referred to when the CPU 41 performs various processes. Further, the main memory 42 stores data which is temporarily used when the CPU 41 performs various processes, and is used as a so-called work area.

The auxiliary storage device 43 may be an auxiliary storage portion of the computer. The auxiliary storage device 43 is, for example, an EEPROM, an HDD, an SSD, or the like. The auxiliary storage device 43 stores data used when the CPU 41 performs various processes, data generated by processing performed by the CPU 41, or the like. The auxiliary storage device 43 may also store the above-mentioned programs such as an operating system and an application.

The programs stored in the main memory 42 or the auxiliary storage device 43 include application software for performing a control process to be described later, for viewing an electronic receipt (hereinafter, referred to as a "viewing application"). As an example, the information terminal 40 is provided to a user in a state where the viewing application is not stored in the main memory 42 or the auxiliary storage device 43. The viewing application separately transferred to the information terminal 40 may be written in the main memory 42 or the auxiliary storage device 43 under the operation of the user, a service man, or the like. However, the information terminal 40 may be provided to a user in a state where the viewing application is stored in the main memory 42 or the auxiliary storage device 43. The transfer of the above-described viewing application can be achieved by being recorded in a removable recording medium such as a magnetic disk, a magneto-optical disk, an optical disk, or a semiconductor memory, or by downloading through a network.

The touch panel 44 functions as a display device that displays a screen that notifies an operator of the information terminal 40 of various items of information. In addition, the touch panel 44 functions as an input device that receives the operator's touch operation.

The network I/F 45 is a communication interface allowing the information terminal 40 to perform communication through the network 50.

The bus 46 includes an address bus, a data bus, and the like, and transmits signals which are transmitted and received by units of the information terminal 40.

The network 50 is a communication network including a mobile phone line network such as 3rd generation (3G) or long term evolution (LTE), the Internet, a local area network (LAN), a dedicated line, or other communication lines.

Hereinafter, operations of the sales data processing apparatus 10, the receipt server 20, and the information terminal 40 will be described with reference to the accompanying drawings. Meanwhile, contents of processes to be described below are just examples, and various processes capable of obtaining the same effects can be appropriately used.

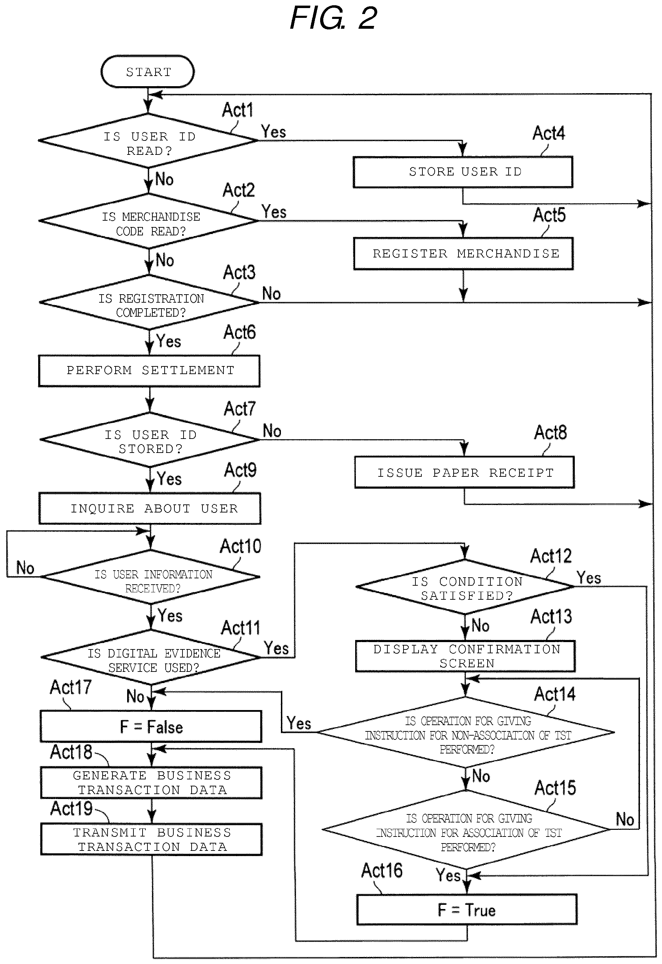

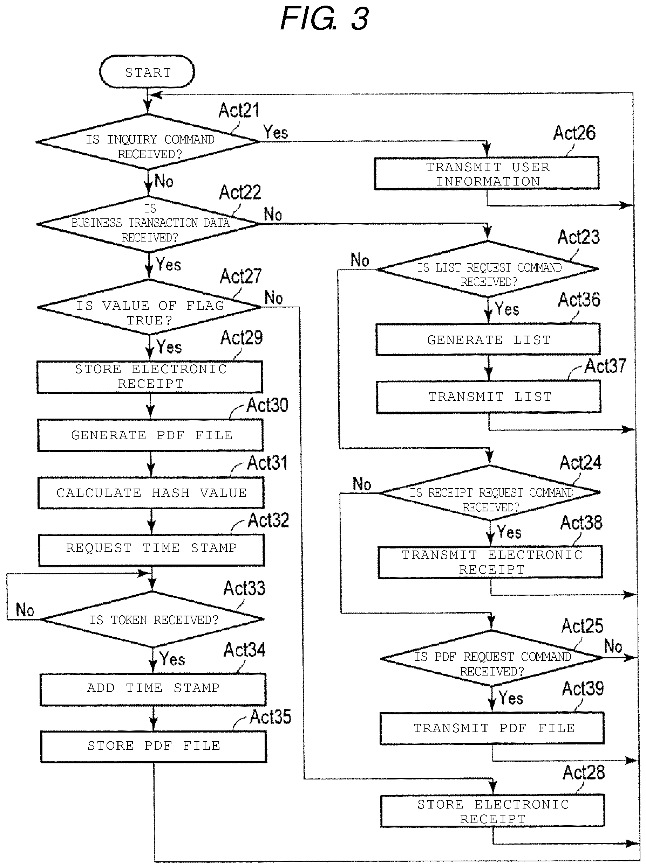

Operations of the sales data processing apparatus 10 and the receipt server 20 when a shopper purchases merchandise will be described with respect to FIGS. 2 and 3. FIG. 2 is a flow chart of a control process performed by the CPU 11. The CPU 11 performs the control process based on a control program stored in the main memory 12 or the auxiliary storage device 13. FIG. 3 is a flow chart of a control process performed by the CPU 21. The CPU 21 performs the control process based on a control program stored in the main memory 22 or the auxiliary storage device 23.

In Act1, the CPU 11 confirms whether or not a user ID is read. That is, the CPU 11 confirms whether or not a bar code including a user ID is read by the scanner 16. When the user ID is not read, the CPU 11 determines No in Act1 and proceeds to Act2.

In Act2, the CPU 11 confirms whether or not a merchandise code is read. That is, the CPU 11 confirms whether or not a bar code attached to merchandise is read by the scanner 16. When the merchandise code is not read, the CPU 11 determines No in Act2 and proceeds to Act3.

In Act3, the CPU 11 confirms whether or not an instruction for the completion of registration is performed. That is, the CPU 11 confirms whether or not a predetermined operation corresponding to an instruction for the completion of registration, such as the pressing of a subtotal button, is performed. The operation corresponding to an instruction for the completion of registration can occur only after one or more merchandise items are registered. The operation of the CPU 11 when an operation corresponding to the instruction for the completion of registration is received if merchandise is not registered may be determined by a designer of a control program of the CPU 11. For example, the CPU 11 may ignore the operation corresponding to an instruction for the completion of registration. Alternatively, the CPU 11 may be configured such that the operation corresponding to an instruction for the completion of registration cannot be performed in a state where merchandise is not registered. When the operation corresponding to an instruction for the completion of registration is not performed, the CPU 11 determines No in Act3 and returns to Act1. In this manner, the CPU 11 repeats Act1 to Act3 until a user ID is read, a merchandise code is read, or an operation corresponding to an instruction for the completion of registration is performed. When the user ID is read in a standby state of Act1 to Act3, the CPU 11 determines Yes in Act1 and proceeds to Act4.

In Act4, the CPU 11 stores in the read user ID in the main memory 12 or the auxiliary storage device 13. Meanwhile, operations when a user ID is read twice or more times may be determined by a designer of a control program of the CPU 11. For example, the CPU 11 stores a user ID which is newly read after the erasure of a previously stored user ID, in the main memory 12 or the auxiliary storage device 13. The CPU 11 performs the process of Act4 and then returns to Act1. When the merchandise code is read in a standby state of Act1 to Act3, the CPU 11 determines Yes in Act2 and proceeds to Act5.

In Act5, the CPU 21 registers the read merchandise code in a merchandise list. That is, the CPU 21 instructs the main memory 12 or the auxiliary storage device 23 to add the read merchandise code to the merchandise list. The CPU 11 performs the process of Act5 and then returns to Act1. When an operation corresponding to an instruction for the completion of registration is performed in a state where one or more merchandise items are registered in the merchandise list in a standby state of Act1 to Act3, the CPU 11 determines Yes in Act3 and proceeds to Act6.

In Act6, the CPU 11 performs settlement based on the merchandise list. A well-known process can be used as the settlement, and thus a description of this process will be omitted.

In Act7, the CPU 11 confirms whether a user ID of an electronic receipt service is stored in the main memory 12 or the auxiliary storage device 13. When the user ID of the electronic receipt service is not stored, the CPU 21 determines No in Act7 and proceeds to Act8.

In Act8, the CPU 11 issues a paper receipt. That is, the CPU 11 controls the printer 17 to print the receipt. The CPU 11 performs the process of Act8 and then returns to Act1. Although not illustrated in the drawing, the CPU 11 stores a merchandise list at this time. When a user ID of an electronic receipt service is stored, the CPU 21 determines Yes in Act7 and proceeds to Act9.

In Act9, the CPU 11 instructs the network I/F 18 to transmit an inquiry command including a user ID to the receipt server 20.

The CPU 21 of the receipt server 20 performs the control process in FIG. 3. In Act21 in FIG. 3, the CPU 21 confirms whether or not the inquiry command is received by the network I/F 24. When the inquiry command is not received, the CPU 21 determines No in Act21 and proceeds to Act22.

In Act22, the CPU 21 confirms whether or not business transaction data (to be described later) is received by the network I/F 24. When the business transaction data is not received, the CPU 21 determines No in Act22 and proceeds to Act23.

In Act23, the CPU 21 confirms whether or not a list request command (to be described later) is received by the network I/F 24. When the list request command is not received, the CPU 21 determines No in Act23 and proceeds to Act24.

In Act24, the CPU 21 confirms whether or not a receipt request command (to be described later) is received by the network I/F 24. When the receipt request command is not received, the CPU 21 determines No in Act24 and proceeds to Act25.

In Act25, the CPU 21 confirms whether or not a PDF request command (to be described later) is received by the network I/F 24. When the PDF request command is not received, the CPU 21 determines No in Act25 and returns to Act21. In this manner, the CPU 11 repeats Act21 to Act25 until any one of the inquiry command, the business transaction data, the list request command, the receipt request command, and the PDF request command is received. When an inquiry command transmitted from the sales data processing apparatus 10 is received in a standby state of Act21 to Act25, the CPU 21 determines Yes in Act21 and proceeds to Act26.

In Act26, the CPU 21 instructs the network I/F 24 to transmit user information identified by a user ID included in the inquiry command to the sales data processing apparatus 10. The CPU 21 performs the process of Act26 and then returns to Act21.

On the other hand, the CPU 11 of the sales data processing apparatus 10 transmits the inquiry command in Act9 in FIG. 2 and then proceeds to Act10.

In Act10, the CPU 11 waits for the reception of user information by the network I/F 18. When the user information transmitted from the receipt server 20 is received, the CPU 11 determines Yes in Act10 and proceeds to Act11.

In Act11, the CPU 11 confirms whether or not the user uses a digital evidence service with reference to the user information. When the user uses the digital evidence service, the CPU 11 determines Yes in Act11 and proceeds to Act12.

In Act12, the CPU 11 confirms whether or not a condition included in the user information is satisfied. For example, in a case of a condition of "settlement amount is 1,000 yen or more", it is confirmed whether or not a settlement amount settled in Act6 is 1,000 yen or more. If a condition is not included in the user information, the condition is regarded as not being satisfied. When the condition is not satisfied, the CPU 11 determines No in Act12 and proceeds to Act13.

In Act13, the CPU 11 generates an image corresponding to a confirmation screen that gives an instruction regarding whether to associate a TST with electronic receipt data of a current transaction, and instructs the customer-side touch panel 15 to display the image. A first button to be touched by a shopper when a TST is to be associated with the electronic receipt data, and a second button to be touched by a shopper when a TST is not to be associated with the electronic receipt data are displayed on the confirmation screen.

The shopper touches the first button or the second button displayed on the customer-side touch panel 15, thereby giving an instruction whether to associate a TST with the electronic receipt data.

In Act14, the CPU 11 confirms whether or not a predetermined operation corresponding to an instruction for the non-association of a TST, such as the touch of the second button, is performed. When the operation corresponding to an instruction for the non-association of a TST is not performed, the CPU 11 determines No in Act14 and proceeds to Act15.

In Act15, the CPU 11 confirms whether or not a predetermined operation corresponding to an instruction for the association of a TST, such as the touch of the first button, is performed. When the operation corresponding to an instruction for the association of a TST is not performed, the CPU 11 determines No in Act15 and returns to Act14. In this manner, the CPU 11 repeats Act14 and Act15 until an instruction for the non-association of a TST or an operation corresponding to an instruction for the association of a TST is performed. When the operation corresponding to an instruction for the association of a TST is performed in a standby state of Act14 and Act15, the CPU 11 determines Yes in Act15 and proceeds to Act16. In addition, when a condition included in user information is satisfied, the CPU 11 determines Yes in Act12 and proceeds to Act16 also in this case.

In Act16, the CPU 11 rewrites the value of the flag F stored in the main memory 12 as True.

On the other hand, when an instruction for the non-association of a TST is performed in a standby state of Act14 and Act15, the CPU 11 determines Yes in Act14 and proceeds to Act17. In addition, when the user does not use a digital evidence service, the CPU 11 determines No in Act11 and proceeds to Act17.

In Act17, the CPU 11 rewrites the value of the flag F stored in the main memory 12 as False.

When the CPU 11 finishes setting the value of the flag F in Act16 or Act17 in the above-described manner, the CPU proceeds to Act18.

In Act18, the CPU 11 generates business transaction data. The business transaction data includes a user ID, electronic receipt data, and a flag F. The electronic receipt data is obtained based on the details of the transaction, such as described in a receipt. A file format of the electronic receipt data may be a text formation format such as extensible markup language (XML), hypertext markup language (HTML), JAVASCRIPT (registered trademark) object notation (JSON), comma-separated values (CSV), or tab-separated values (TSV).

In Act19, the CPU 11 instructs the network I/F 18 to transmit the generated business transaction data to the receipt server 20. The CPU 11 performs the process of Act19 and then returns to Act1. Although not illustrated in the drawing, the CPU 11 lists a merchandise list at this time.

Incidentally, when the business transaction data transmitted from the sales data processing apparatus 10 is received in a standby state of Act21 to Act25 in FIG. 3, the CPU 21 of the receipt server 20 determines Yes in Act22 and proceeds to Act27.

In Act27, the CPU 21 confirms whether or not the value of the flag F which is transmitted from the sales data processing apparatus 10 is True. When the value of the flag F is False, the CPU 21 determines No in Act27 and proceeds to Act28.

In Act28, the CPU 21 controls the auxiliary storage device 23 to store electronic receipt data included in the received business transaction data. At this time, the CPU 21 allocates a receipt key to the electronic receipt data. In addition, the CPU 21 sets a type key having a value of 0 in the electronic receipt data. The type key having a value of 0 means that a PDF file (to be described later) is not present with respect to the electronic receipt data. By this processing, a receipt ID including a receipt key and a type key is allocated to the electronic receipt data. The CPU 21 performs the process of Act28 and then returns to Act21.

When the value of the flag F is True, the CPU 21 determines Yes in Act27 and proceeds to Act29.

In Act29, the CPU 21 controls the auxiliary storage device 23 to store the electronic receipt data included in the received business transaction data. At this time, the CPU 21 allocates a receipt key to the electronic receipt data. In addition, the CPU 21 sets a type key having a value of 1 in the electronic receipt data. Meanwhile, the type key having a value of 1 means that the PDF file is present with respect to the electronic receipt data. By this processing, the receipt ID including the receipt key and the type key is allocated to the electronic receipt data.

In Act30, the CPU 21 generates a PDF file. The PDF file is an electronic receipt file in a PDF format. The PDF file stores electronic receipt data converted into a format suitable for the PDF file. Meanwhile, the electronic receipt data stored in the auxiliary storage device 23 in Act29 is left stored in the auxiliary storage device 23 as data to be viewed by a user.

In Act31, the CPU 21 calculates a hash value of the electronic receipt data included in the PDF file. The calculation of the hash value can be performed using a well-known method.

In Act32, the CPU 21 instructs the network I/F 24 to transmit a stamp request command to the time stamp server 30. The stamp request command includes the hash value calculated in Act31.

The time stamp server 30 receiving the stamp request command generates a TST. That is, the time stamp server 30 acquires time information indicating the present date and time in order to generate a TST. The time stamp server 30 generates a TST by using the hash value included in the stamp request command and the time information. Meanwhile, the TST and the generation method thereof as described above are examples, and a well-known method can be used for the generation of a TST. The time stamp server 30 transmits the generated TST to the receipt server 20 transmitting the stamp request command.

The CPU 21 of the receipt server 20 transmits the stamp request command and then proceeds to Act33.

In Act33, the CPU 21 waits for the reception of a TST by the network I/F 24. In Act33, the CPU 21 controls the network I/F 24 so as to receive the TST. The network I/F 24 receives the TST under the control of the computer. In this process, the computer operates as an acquisition unit. In addition, the network I/F 24 operates as a communication device. When the TST is received, the CPU 21 determines Yes in Act33 and proceeds to Act34.

In Act34, the CPU 21 adds the TST to the PDF file. By this process, the TST is associated with electronic receipt data. In this manner, in Act34, the CPU 21 operates as an association unit.

In Act35, the CPU 21 instructs the auxiliary storage device 23 to save the PDF file having the TST attached thereto. At this time, the CPU 21 allocates a receipt ID to the PDF file. The receipt ID is obtained by changing the value of the type key configuring the receipt ID, which is allocated to the electronic receipt data in Act29, to 2. In this manner, the type key having a value of 2 indicates a PDF file. The CPU 21 performs the process of Act35 and then returns to Act21.

As illustrated in the processes of Act27 to Act35, it is determined whether or not a TST is associated in accordance with the value of the flag F. The value of the flag F is set to be True when an operation corresponding to an instruction for the association of a TST on a confirmation screen is performed. In this manner, the CPU 21 operates as a determination unit that determines whether to perform association regarding settlement in accordance with an instruction for each transaction by a user of an electronic receipt service in the process of Act27. Meanwhile, when the condition included in the user information is satisfied, the CPU 21 regards the execution of association as being instructed by the user.

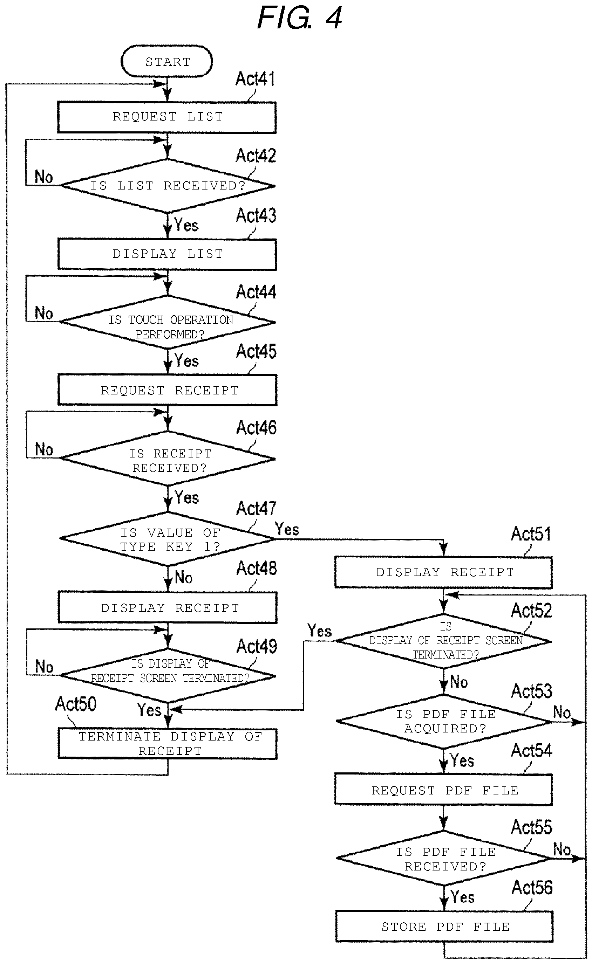

Next, operations of the receipt server 20 and the information terminal 40 when a user of an electronic receipt service acquires electronic receipt data will be described based on FIGS. 3 and 4. FIG. 4 is a flow chart of a control process performed by the CPU 41. The CPU 41 performs the control process based on the viewing application stored in the main memory 42 or the auxiliary storage device 43.

The user desiring to acquire the electronic receipt data operates the information terminal 40 to give an instruction for the execution of the viewing application. The CPU 41 starts the control process illustrated in FIG. 4 based on the viewing application in accordance with the instruction.

In Act41, the CPU 41 instructs the network I/F 45 to transmit a list request command including a user ID to the receipt server 20.

Incidentally, when the list request command transmitted from the information terminal 40 is received in a standby state of Act21 to Act25 in FIG. 3, the CPU 21 of the receipt server 20 determines Yes in Act23 and proceeds to Act36.

In Act36, the CPU 21 generates list data indicating a list of electronic receipts permitted to be viewed by a user identified by the user ID included in the list request command. That is, the CPU 21 generates list data indicating a list of electronic receipt data, stored in association with the user ID, which have a type key of 0 or 1.

In Act37, the CPU 21 instructs the network I/F 24 to transmit the list data to the information terminal 40. The CPU 21 performs the process of Act37 and then returns to Act21.

On the other hand, the CPU 41 of the information terminal 40 transmits the list request command in Act41 in FIG. 4 and then proceeds to Act42.

In Act42, the CPU 41 waits for the reception of list data by the network I/F 45. When the list data transmitted from the receipt server 20 is received, the CPU 41 determines Yes in Act42 and proceeds to Act43.

In Act43, the CPU 41 generates an image corresponding to a list screen on which a list of viewable electronic receipts is shown, based on the list data, and controls the touch panel 44 to display the image. As an example, a receipt ID, a date and time of purchase, a purchase store, and the like which are included in each piece of electronic receipt data is shown on the list screen.

A user performs an operation for designating an electronic receipt to be viewed, by the touch panel 44 on the list screen. Specifically, the user performs a touch operation on the touch panel 44 for touching a region that displays a receipt ID, a date and time of purchase, a purchase store, and the like with respect to an electronic receipt to be viewed.

In Act44, the CPU 41 waits for the execution of the above-mentioned touch operation. When the touch operation is performed, the CPU 41 determines Yes in Act44 and proceeds to Act45.

In Act45, the CPU 41 instructs the network I/F 45 to transmit a receipt request command to the receipt server 20. The receipt request command includes a receipt ID allocated to electronic receipt data corresponding to a region touched on the list screen.

Incidentally, when the receipt request command transmitted from the information terminal 40 is received in a standby state of Act21 to Act25 in FIG. 3, the CPU 21 of the receipt server 20 determines Yes in Act24 and proceeds to Act38.

In Act38, the CPU 21 reads out electronic receipt data, which is specified by a receipt ID included in the receipt request command, from the auxiliary storage device 23, and instructs the network I/F 24 to transmit the electronic receipt data to the information terminal 40. The CPU 21 performs the process of Act38 and then returns to Act21.

On the other hand, the CPU 41 of the information terminal 40 transmits the receipt request command in Act45 in FIG. 4, and then proceeds to Act46.

In Act46, the CPU 41 waits for the reception of electronic receipt data by the network I/F 45. When the electronic receipt data transmitted from the receipt server 20 is received, the CPU 41 determines Yes in Act46 and proceeds to Act47.

In Act47, the CPU 41 confirms whether or not a PDF file is present, that is, whether or not the value of a type key configuring the receipt ID included in the receipt request command is 1. If the value of the type key is 0, the CPU 41 determines No in Act47 and proceeds to Act48.

In Act48, the CPU 41 generates an image corresponding to a receipt screen and instructs the touch panel 44 to display the image. The receipt screen includes an electronic receipt image based on the generated electronic receipt data and a close button to be touched by an operator when the display of the receipt screen is terminated.

In Act49, the CPU 41 waits for the execution of an operation corresponding to an instruction for the termination of display of the receipt screen. That is, the CPU 41 confirms whether or not a predetermined operation corresponding to an instruction for the termination of display of the receipt screen, such as the touch of the close button displayed on the touch panel 44, is performed. When the operation corresponding to an instruction for the termination of display of the receipt screen is performed, the CPU 41 determines Yes in Act49 and proceeds to Act50.

In Act50, the CPU 41 instructs the touch panel 44 to terminate the display of the receipt screen. The CPU 41 performs the process of Act50 and then returns to Act41. When the value of the type key is 1, the CPU 41 determines Yes in Act47 and proceeds to Act51.

In Act51, the CPU 41 generates an image corresponding to a receipt screen, similar to Act48, and instructs the touch panel 44 to display the image. However, an acquisition button to be touched by an operator for acquiring a PDF file is also displayed on the receipt screen in Act51.

In Act52, the CPU 41 confirms whether or not an operation corresponding to an instruction for the termination of display of the receipt screen is performed. That is, the CPU 41 confirms whether or not a predetermined operation corresponding to an instruction for the termination of display of the receipt screen, such as the touch of the close button displayed on the touch panel 44, is performed. When the operation corresponding to an instruction for the termination of display of the receipt screen is not performed, the CPU 41 determines No in Act52 and proceeds to Act53.

In Act53, the CPU 41 confirms whether or not an operation corresponding to an instruction for the acquisition of the PDF file is performed. That is, the CPU 41 confirms whether or not a predetermined operation corresponding to an instruction for the acquisition of the PDF file, such as the touch of the acquisition button displayed on the touch panel 44, is performed. When the operation corresponding to an instruction for the acquisition of a PDF file is not performed, the CPU 41 returns to Act51. In this manner, the CPU 41 repeats Act52 and Act53 until the operation corresponding to an instruction for the termination of display of the receipt screen is performed or until the operation corresponding to an instruction for the acquisition of a PDF file is performed. When the operation corresponding to an instruction for the termination of display of the receipt screen is performed, the CPU 41 determines Yes in Act52 and proceeds to Act50. As described above, the CPU 41 terminates the display of the receipt screen and then returns to Act41. On the other hand, when the operation corresponding to an instruction for the acquisition of a PDF file is performed, the CPU 41 determines Yes in Act53 and proceeds to Act54.

In Act54, the CPU 41 instructs the network I/F 45 to transmit a PDF request command to the receipt server 20. The PDF request command includes a receipt ID allocated to a PDF file. The receipt ID is obtained by changing the value of the type key configuring the receipt ID included in the receipt request command to 2.

Incidentally, when the PDF request command transmitted from the information terminal 40 is received in a standby state of Act21 to Act25 in FIG. 3, the CPU 21 of the receipt server 20 determines Yes in Act25 and proceeds to Act39.
In Act39, the CPU 21 reads out a PDF file, which is identified by a receipt ID included in the PDF request command, from the auxiliary storage device 23 and instructs the network I/F 24 to transmit the PDF file to the information terminal 40. The CPU 21 performs the process of Act39 and then returns to Act21.

On the other hand, the CPU 41 of the information terminal 40 transmits the PDF request command in Act54 in FIG. 4 and then proceeds to Act55.

In Act55, the CPU 41 waits for the reception of the PDF file by the network I/F 45. When the PDF file transmitted from the receipt server 20 is received, the CPU 41 determines Yes in Act55 and proceeds to Act56.

In Act56, the CPU 41 instructs the auxiliary storage device 43 to store the acquired PDF file. The CPU 41 performs the process of Act56 and then returns to Act52.

The PDF file transmitted from the receipt server 20 in this manner is stored in the auxiliary storage device 43. In the PDF file, a TST is associated with electronic receipt data. Therefore, when at least one of the electronic receipt data and the TST is modified, a hash value calculated based on the electronic receipt data and a hash value calculated based on the TST are different from each other. In other words, it is possible to certify that the PDF file is not modified based on conformity between the hash value calculated based on the electronic receipt data and the hash value calculated based on the TST. In addition, it is possible to certify that electronic receipt data included in the same PDF file is present at a date and time indicated by time information extracted from a TST. Meanwhile, the term "modification" as used herein is not limited to intentional modification and also includes a case where data is rewritten or corrupted due to an erroneous operation of a computer, or the like.

In addition, the receipt server 20 can allow a user to give an instruction regarding whether to associate a TST for each transaction settlement. Therefore, the user does not wastefully associate a TST with electronic receipt data which is not required to be associated with a TST. Thereby, the amount of processing and the amount of data stored in the receipt server 20 are not unnecessarily increased. In addition, when the time stamp server 30 performs charging in accordance with the number of TSTs issued, it is possible to prevent an increase in costs required for the issuance of unnecessary TSTs.

In addition, when a condition which is set in advance by a user is satisfied, the receipt server 20 determines to associate a TST with electronic receipt data without receiving the user's instruction. Therefore, the user may not performs an operation of designating whether to perform association, with respect to electronic receipt data for which the association of a TST is desired based on the condition which is set in advance by the user. Thereby, it is possible to prevent the burden of the user's operation from being unnecessarily increased.

The above-described embodiment can be modified as follows.

The format of an electronic receipt file is not limited to a PDF format, and may be a file format by which electronic receipt data and a TST can be stored.

In the above-described embodiment, a description is given of an example in which electronic receipt data and a TST are stored in one file in association with each other. However, electronic receipt data and a TST may be stored as separate files, and the files may be associated with each other by separate management data or the like.

In the above-described embodiment, the sales data processing apparatus 10 transmits electronic receipt data and a flag F to the receipt server 20. The CPU 21 of the receipt server 20 that has received the flag F associates a TST with electronic receipt data based on the value of the flag F. However, the flag F may be analyzed as data for instructing the receipt server 20 whether to perform association. In this case, in the process of Act17, the CPU 11 operates as a determination unit that determines to perform association. In addition, in the process of Act19 when the value of the flag F is True, the CPU 11 and the network I/F 18 operate as an instructing unit that instructs the receipt server 20 to associate a TST with electronic receipt data.

A screen that makes a user give an instruction regarding whether to associate a TST may be displayed on the touch panel 14. In this case, an operator inquires of a shopper whether to associate a TST, and operates the touch panel 14 in accordance with the shopper's reply.

The receipt server 20 may determine whether or not a condition included in user information is satisfied. In this case, for example, the processing is performed as follows. The sales data processing apparatus 10 transmits a settlement amount, a merchandise list, and the like to the receipt server 20 together with an inquiry command. The CPU 21 of the receipt server 20 that has received the inquiry command determines whether or not the condition is satisfied, based on contents transmitted from the sales data processing apparatus 10. The CPU 21 transmits a determination result to the sales data processing apparatus 10 together with the user information. The CPU 11 of the sales data processing apparatus 10 which receives the user information and the determination result may perform the determination of Act12 based on the above-mentioned determination result received.

In the above-described embodiment, whether to associate a TST is determined in accordance with an operator's instructing operation only when a condition included in user information is not satisfied. However, the CPU 11 or the CPU 21 may determine whether to associate a TST in accordance with an instructing operation only when a condition included in user information is satisfied. In addition, the CPU 11 or the CPU 21 may determine whether to associate a TST with electronic receipt data when a condition included in user information is satisfied. Alternatively, the CPU 11 or the CPU 21 may determine whether to associate a TST with electronic receipt data when a condition included in user information is not satisfied. For example, in a case of a condition of "settlement amount is 1,000 yen or less", it is determined that a TST is associated when an amount settled in Act6 is not 1,000 yen or less. Further, the CPU 11 or the CPU 21 may determine whether to associate a TST in accordance with only an operator's instructing operation.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. An electronic receipt system comprising a point-of-sale (POS) terminal and a receipt server, wherein
the POS terminal is configured to:
perform a settlement transaction with respect to a transaction for a user,
determine, based on a user setting, whether a digital authentication service should be applied to electronic receipt data corresponding to the settlement transaction,
generate the electronic receipt data corresponding to the settlement transaction, wherein the electronic receipt data includes a user ID of the user and indicates whether the digital authentication service should be applied thereto, and
transmit the electronic receipt data to the receipt server, and the receipt server is configured to:
store the electronic receipt data received from the POS terminal,
determine whether the electronic receipt data indicates that the digital authentication service should be applied thereto,
when the electronic receipt data indicates that the digital authentication service should be applied thereto, request and receive a time stamp token (TST) from a time stamping authority server, wherein the TST is generated based on a hash of the electronic receipt data and a time of generation,
when the TST is received, store the TST in association with the electronic receipt data, and
in response to a request for certified electronic receipt data, transmit the electronic receipt data with the associated TST.

2. The system according to claim 1, wherein the user setting is a predetermined condition stored in association with the user ID.

3. The system according to claim 2, wherein the predetermined condition is a threshold monetary amount.

4. The system according to claim 2, wherein the predetermined condition is a specific merchandise subject to the settlement transaction.

5. The system according to any one of claims 1 to 4, wherein the user setting is input by the user in connection with the settlement transaction.

6. The system according to any one of claims 1 to 5, wherein, when the electronic receipt data indicates that the digital authentication service should be applied thereto, the receipt server is further configured to:
generate a PDF file including the electronic receipt data and the time of generation of the TST.

7. The system according to claim 6, wherein the PDF file and the TST are transmitted in response to the request for certified electronic receipt data.

8. A method for performing an electronic receipt management, comprising the steps of:
storing electronic receipt data received from a point-of-sale terminal;
determining whether the electronic receipt data indicates that a digital authentication service should be applied thereto;
when the electronic receipt data indicates that the digital authentication service should be applied thereto, requesting and receiving a time stamp token (TST) from a time stamping authority server, wherein the TST is generated based on a hash of the electronic receipt data and a time of generation;
storing the TST in association with the electronic receipt data; and
in response to a request for certified electronic receipt data, transmitting the electronic receipt data with the associated TST.

9. The method according to claim 8, wherein the electronic-receipt-data storing step comprises storing the electronic receipt data includes a flag indicating whether the digital authentication service should be applied.

10. The method according to claim 8 or 9, further comprising the step of:
generating a PDF file including the electronic receipt data and the time of generation of the TST, when the electronic receipt data indicates that the digital authentication service should be applied thereto.

11. The method according to claim 10, wherein the PDF-file generating step comprises transmitting the PDF file and the TST in response to the request for certified electronic receipt data.

12. A receipt server connected over a network to a point-of-sale (POS) terminal, the receipt server comprising:
a network interface,
a storage unit, and
a processor configured to control the network interface, wherein the storage unit is configured to perform the method according to any one of claims 8 to 11.

13. A non-transitory computer readable medium containing a program causing a server to perform an electronic receipt management method according to any one of claims 8 to 11.

14. A computer program product comprising program code means stored on a computer readable medium for performing the method according to any one of claims 8 to 11, when the program product is run on a computer.
